# EUROPEAN PATENT SPECIFICATION

(11) **EP 1 264 121 B1**
(45) Date of publication and mention of the grant of the patent: **12.11.2003**
(21) Application number: 01907892.2
(22) Date of filing: 21.02.2001
(51) Int. Cl.: F16G 5/20

(54) **V-BELT SYSTEM**
KEILRIEMENSYSTEM
SYSTEME DE COURROIE TRAPEZOIDALE

(30) Priority: 22.02.2000 GB 0004169
(43) Date of publication of application: 11.12.2002
(73) Proprietor: THE GATES CORPORATION, Denver, Colorado 80209 (US)
(72) Inventor: CLARKE, Arthur, Irongray, Dumfries and Galloway DG2 9SQ (GB)
(74) Representative: James, Anthony Christopher W.P.
(86) International application number: GB0100726
(87) International publication number: WO01063145

(56) References cited:
- EP-A- 0 220 796
- FR-A- 2 634 846
- GB-A- 988 238
- US-A- 1 777 864
- US-A- 4 031 761
- US-A- 4 188 832

## Description

The invention relates to a synchronous v-belt system.

Power transmission by belt drive is generally accomplished with one of two types of belts. They are generally either a synchronous belt or a v-belt. Synchronous belts comprise belts having teeth or cogs on a pulley engaging surface. The teeth or cogs engage a toothed pulley. Synchronous belts positively engage the pulley in which they are trained, thereby allowing high torque transmission.

V-belts comprise a belt having sides cut at a pre-determined angle. The sides of the belt are trained in a single groove on a v-groove pulley. They operate at lower torques but are capable of operating more quietly than the synchronous belt. Further v-belts will slip when exposed to loading conditions when the applied load exceeds the power transmission capability of the pulley with the smallest diameter or wrapped circumference. Consequently, the horsepower transmission or torque capacity is determined and limited by the diameter of the smallest pulley in the system. In high ratio drives this is particularly restrictive as the reduced angle of wrap about the smaller pulley will significantly reduce the drive power and torque capacity.

Although synchronous drives solve a number of the shortcomings of the v-belt drives, other negative factors are produced. They include the need for expensive toothed pulleys having side flanges. These are particularly problematic when large pulleys are used, due to the expense of producing the large pulleys. Further, because of the positive engagement nature of the synchronous belt/drive, all start up and shock loads are transmitted through the system, which can overload structural parts. This, in turn, requires heavier structural parts. Synchronous belts can also produce greater noise levels than those generated by v-belt drives, particularly at high speeds.

As for v-belts operating on small diameter pulleys, the belt tension must be maintained at a high level to reduce the tendency to slip, again imposing high bearing and structural loads. A v-belt allowing a limited amount of slip at start up and during load changes will reduce the amplitude of short duration peak loads.

Representative of the art is U.S. Patent No. 4,332,576 to Stecklein *et al.* which discloses a single or multiple strand molded notch v-belt. The notches have a generally sinusoidal shape that serves to distribute and minimize bending stresses. The belts have a partial application of fabric along an outer surface of a compression section to control cracking. No disclosure is made regarding training the belt about a toothed sprocket.

Also representative of the art is U.S. Patent No. 4,657,526 to Tangorra *et al*. which discloses a v-belt having layers and fibers oriented in particular directions and having a plurality of notches or teeth arranged transversely to a longitudinal direction. The invention is intended for use only in a single v-groove pulley and no teaching is disclosed teaching use of the disclosed belt with a synchronous or toothed pulley.

The form of belt "teeth" disclosed in the prior art are designed as stress reducers in a compression section of the belt, i.e. notches. They allow a belt to train around a pulley with reduced stress in the compression section. This as opposed to the belt notches being designed to mesh with synchronous pulley teeth for power transmission. The prior art does not teach a belt having a synchronous profile with a v-belt profile used for power transmission.

What is needed is a synchronous v-belt having a toothed pulley engagement surface for meshing with a toothed pulley surface, and which is fully covered by a cover layer. What is also needed is a synchronous v-belt having pulley engaging opposing inclined side surfaces for engaging a v-groove pulley. The present invention meets these needs.

According to the present invention, we provide a synchronous v-belt power transmission system comprising:
an endless member having a pulley engaging surface and opposing inclined sides and at least one tensile member extending along a major axis of the endless member;
the pulley engaging surface having a toothed profile for engaging a toothed pulley;
the opposing inclined sides describing an included angle α for engaging a v-belt pulley groove;
a v-belt pulley having a groove and a first diameter,
a toothed pulley having a second diameter;
the first diameter being greater than the second diameter; the pulley engaging surface and the opposed inclined sides being disposed on the same side of the endless member and wherein the same side of the endless member is drivingly engaged with both, the v-belt pulley groove and the toothed pulley, the endless member having a predetermined tension such that a momentary slip occurs between the opposing inclined sides and the v-belt pulley groove during a load change.

The cover layer increases belt life and reduces noise. The opposing sides may be cut, ground or molded. On start up the v-belt slips slightly in the v-groove pulley, thereby reducing the initial start up shock to the system. Therefore, the limit for power transmission is the size and angle of wrap of the larger v-belt pulley. They synchronous drive pulley provides a positive mechanical belt interface, which allows up to 30% more torque to be transmitted by the inventive system while reducing operating noise, depending upon the system design parameters.

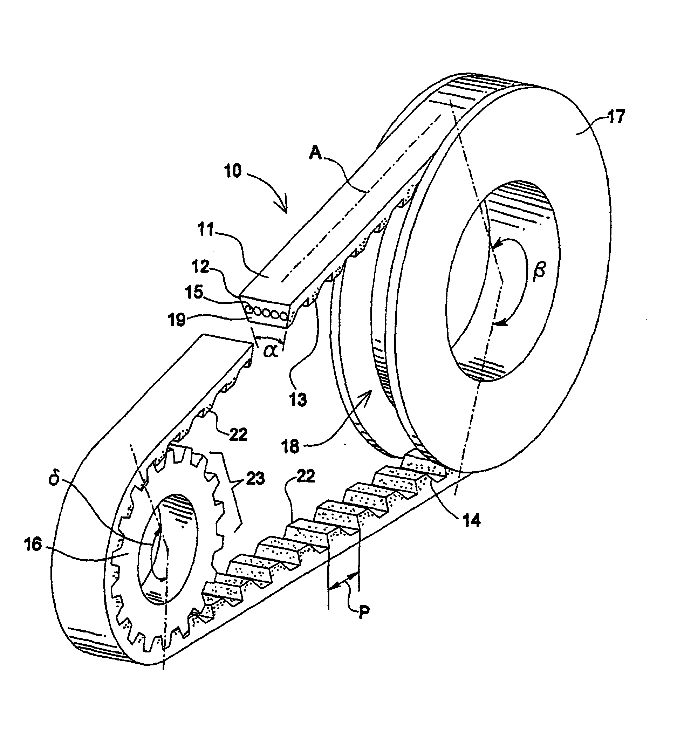

A preferred embodiment of synchronous v-belt system according to the invention is now described by way of example with reference to the accompanying drawing, which is a partial cut-away perspective view.

Referring to the drawing, an endless member or belt 10 is shown trained between synchronous toothed pulley 16 and v-belt pulley 17. Synchronous toothed pulley 16 and v-belt pulley 17 are connected to rotating shafts (not shown) as required by a user. Belt 10 comprises overcord 11 and undercord 19. Overcord 11 and undercord 19 each may comprise any material known in the synchronous or v-belt art, including but not limited to elastomeric or urethane materials. Belt 10 also comprises tensile cords 15. Tensile cords 15 are arranged parallel to a major axis A of the belt. Tensile cords 15 may comprise any material known in the synchronous or v-belt art, including but not limited to glass fibers, aramid, nylon, polyester or PBO. The tensile cords may be twisted or braided.

The elastomeric material may also incorporate short fibers (not shown) which extend from sides 12, 13. The short fibers reduce noise from operation of the belt. The fibers have a length of 0.5-6mm and a diameter of 0 + to 18µm. The fibers comprise any known in the art, including but not limited to organic fibers, inorganic fibers, cotton, pulp, aramid, KEVLAR™, and PBO.

Teeth 14 are arranged transversely across undercord 19. The teeth are designed to mesh with the toothed surface 23 of synchronous pulley 16. The grooves between the teeth of pulley 16 may be a conjugate of the belt teeth, as is known in the art. The tooth profile of the belt may also comprise any known in the synchronous belt art, including arcuate and trapezoidal shapes. The tooth spacing or pitch, p, is determined by a user, but may be included in the range of 3mm to 14mm by way of example and not of limitation. Other pitches are acceptable according to the design needs of a user.

Undercord 19 may have a cover layer 22. The cover layer may include, but not be limited to nylon, woven or non-woven materials known in the art. Cover 22 reduces noise and increases the useful life of the belt. Cover 22 covers the entire outer surface of the undercord 19 that comes in contact with a synchronous pulley 16, said cover 22 extending between the sides 12, 13.

Pulley 17 is a v-belt or v-groove pulley known in the art It has a pulley groove angle that cooperates with the belt side angle a. Opposing belt side 12 and belt side 13 describe included belt side angle a. The pulley groove angle may equate to the included belt side angle α, or may be up to 12° less than the included angle α. The belt is cut, ground or molded in order to create the opposing sides 12, 13 and the included angle α. Cutting, grinding or molding also results in the sides having a coefficient of friction suitable for the service intended, as is known in the v-belt art. The values for α are in the range of 30° to 60°. Consequently, the belt will operate in any commercially available v-belt pulley as well as accommodate particular design requirements of a user.

Replacing the smaller v-groove pulley with a synchronous pulley increases the power capacity of the system over that of a purely v-belt pulley system without the attendant need for a higher installed belt tension. Increased tension in a belt will also decrease its useful life. Further, in purely v-belt systems a reduced belt angle of wrap on the smaller pulley, δ, in drive systems having high speed ratios reduces the power transmission characteristics of the system. Consequently, since no slip occurs in the synchronous pulley the limit for power transmission with the inventive belt is determined by the size and angle of wrap of the larger v-belt pulley.

On start up, peak transient loads are reduced by belt slip and radial movement of the belt in the larger v-groove pulley. The relatively large wrap angle, β, in the v-groove pulley 17 ensures that the power transmission capacity is compatible with that of the smaller synchronous pulley, all at a lower installed tension. On start up, belt slip occurs between the opposing sides 12, 13 and the sides of the v-groove 18 of pulley 17. The belt slip occurs over a short distance and time duration.

Although a single form of the invention has been described herein, it will be obvious to those skilled in the art that variations may be made in the construction and relation of parts without departing from the scope of the invention described herein.

## Claims

1. A synchronous v-belt power transmission system comprising:
an endless member (10) having a pulley engaging surface (14,22) and opposing inclined sides (12,13) and at least one tensile member (15) extending along a major axis (A) of the endless member (10);
the pulley engaging surface (14,22) having a toothed profile for engaging a toothed pulley (16);
the opposing inclined sides (12,13) describing an included angle a for engaging a v-belt pulley groove (18);
a v-belt pulley (17) having a groove (18) and a first diameter;
a toothed pulley (16) having a second diameter;
the first diameter being greater than the second diameter;
**characterised in that** the pulley engaging surface (14,22) and the opposing inclined sides (12,13) are disposed on the same side of the endless member (10); and **in that** the same side of the endless member is drivingly engaged with the v-belt pulley groove (18) and the toothed pulley (16), the endless member (10) having a predetermined tension such that a momentary slip occurs between the opposing inclined sides (12,13) and the v-belt pulley groove (18) during a load change.

2. The system as claimed in claim 1, wherein the endless member has a pulley engaging profile which comprises teeth (14) arranged transverse to the major axis (A) of the endless member (10).

3. The system as claimed in claim 1 or 2, further comprising:
a cover layer (22) on the pulley engaging surface (14,22).

4. The system as claimed in any one of claims 1 to 3, further comprising:
fibers extending from the opposing inclined sides (12,13).

5. The system as claimed in any one of claims 1 to 4, wherein:
the endless member (10) has an angle of wrap β about the v-belt pulley (17);
the endless member (10) has an angle of wrap δ about the toothed pulley (16); and
β is greater than δ.

6. The system as clamed in any one of claims 1 to 5, wherein only two pulleys (16 and 17) are provided.

## Patentansprüche

1. Synchron-Keilriemen-Kraftübertragungssystem mit:
einem Endloselement (10) mit einer an einer Riemenscheibe angreifenden Fläche (14,22) und einander gegenüberliegenden Schrägseiten (12, 13) und mindestens einem Zugelement (15), das entlang einer Hauptachse (A) des Endloselements (10) verläuft;
wobei die an der Riemenscheibe angreifende Fläche (14,22) ein gezahntes Profil zum Angreifen an einer gezahnten Riemenscheibe (16) aufweist;
wobei die einander gegenüberliegenden Schrägseiten (12,13) einen eingeschlossenen Winkel α zum Eingreifen in eine in einer Keilriemenscheibe ausgebildete Nut (18) beschreiben;
einer Keilriemenscheibe (17) mit einer Nut (18) und einem ersten Durchmesser;
einer gezahnten Riemenscheibe (16) mit einem zweiten Durchmesser;
wobei der erste Durchmesser größer ist als der zweite Durchmesser;
**dadurch gekennzeichnet, dass**
die an der Riemenscheibe angreifende Fläche (14,22) und die einander gegenüberliegenden Schrägseiten (12,13) auf derselben Seite des Endloselements (10) angeordnet sind; und dass dieselbe Seite des Endloselements in antreibendem Eingriff mit der in der Keilriemenscheibe ausgebildeten Nut (18) und der gezahnten Riemenscheibe (16) steht, wobei das Endloselement (10) eine vorbestimmte Spannung hat, so dass bei einem Lastwechsel ein momentaner Schlupf zwischen den einander gegenüberliegenden Schrägseiten (12,13) und der in der Keilriemenscheibe ausgebildeten Nut (18) auftritt.

2. System nach Anspruch 1, bei dem das Endloselement ein an der Riemenscheibe angreifendes Profil mit Zähnen (14) aufweist, die quer zu der Hauptachse (A) des Endloselements (10) angeordnet sind.

3. System nach Anspruch 1 oder 2, ferner mit:
einer Deckschicht (22) auf der an der Riemenscheibe angreifenden Fläche (14,22).

4. System nach einem der Ansprüche 1 bis 3, ferner mit:
Fasern, die von den einander gegenüberliegenden Schrägseiten (12,13) vorstehen.

5. System nach einem der Ansprüche 1 bis 4, bei dem
das Endloselement (10) einen Umschlingungswinkel β um die Keilriemenscheibe (17) aufweist;
das Endloselement (10) einen Umschlingungswinkel 8 um die gezahnte Riemenscheibe (16) aufweist; und
β größer als δ ist.

6. System nach einem der Ansprüche 1 bis 5, bei dem nur zwei Riemenscheiben (16 und 17) vorgesehen sind.

## Revendications

1. Système de transmission de puissance par courroie trapézoïdale crantée, comprenant :
un élément sans fin (10) comportant une surface (14, 22) d'engagement de poulie et des côtés inclinés opposés (12, 13) et au moins un élément (15) de traction s'étendant le long d'un axe principal (A) de l'élément sans fin (10) ;
la surface (14, 22) d'engagement de poulie ayant un profil cranté pour l'engagement d'une poulie dentée (16) ;
les côtés inclinés opposés (12, 13) formant un angle inclus α pour l'engagement d'une gorge (18) de poulie de courroie trapézoïdale ;
une poulie (17) de courroie trapézoïdale comportant une gorge (18) et ayant un premier diamètre ;
une poulie dentée (16) ayant un second diamètre ;
le premier diamètre étant supérieur au second diamètre ;
**caractérisé en ce que** la surface (14, 22) d'engagement de poulie et les côtés inclinés opposés (12, 13) sont disposés du même côté de l'élément sans fin (10) ; et **en ce que** ce même côté de l'élément sans fin engage, par entraînement, la gorge (18) de poulie de courroie trapézoïdale et la poulie dentée (16), l'élément sans fin (10) présentant une tension prédéterminée de sorte qu'un patinage momentané se produit entre les côtés inclinés opposés (12, 13) et la gorge (18) de poulie de courroie trapézoïdale pendant une variation de charge.

2. Système selon la revendication 1, dans lequel l'élément sans fin présente un profil d'engagement de poulie qui comprend des crans (14) transversaux à l'axe principal (A) de l'élément sans fin (10).

3. Système selon la revendication 1 ou 2, comprenant en outre :
une couche (22) de couverture sur la surface (14, 22) d'engagement de poulie.

4. Système selon l'une quelconque des revendications 1 à 3, comprenant en outre :
des fibres s'étendant à partir des côtés inclinés opposés (12, 13).

5. Système selon l'une quelconque des revendications 1 à 4, dans lequel :
l'élément sans fin (10) forme un angle d'enroulement β autour de la poulie (17) de courroie trapézoïdale ;
l'élément sans fin (10) forme un angle d'enroulement δ autour de la poulie dentée (16) ; et dans lequel l'angle β est plus grand que l'angle δ.

6. Système selon l'une quelconque des revendications 1 à 5, dans lequel on ne trouve que deux poulies (16 et 17).
